# EUROPEAN PATENT APPLICATION

(11) **EP 3 915 452 A1**
(43) Date of publication of application: **01.12.2021**
(21) Application number: 20179007.8
(22) Date of filing: 09.06.2020
(51) Int. Cl.: A47J 43/24, A21B 3/13

(54) **LOCKING FALSE BOTTOM MULTIFUNCTIONAL KITCHEN APPLIANCE**

(30) Priority: 25.05.2020 CN 202020892933 U
(71) Applicant: Yangjiang City Xiangmao Trading Co., Ltd., Yangjiang City (CN)
(72) Inventor: Li, Guimin, Benxi City, Liaoning Province (CN)
(74) Representative: Cabinet Chaillot

(57) **Abstract**

The present disclosure provides a locking false bottom multifunctional kitchen appliance, including: a main body that is machined into a sheet-like body from a silica gel material, two sides of a left side body and a right side body of the sheet-like body being docked to define a circular body, an upper flange and a lug protruding outwards from a top of the circular body, a support side being disposed at a bottom of the circular body, a groove being recessively disposed on the support side, a docking portion of the circular body being provided with a catch device, the catch device being capable of operating the left side body and the right side body of the circular body for combination or separation. During use, any sheet having a desired number of meshes only needs to be mounted. The sheets are diversified, and thus the product is multifunctional, reasonable in structure, convenient in use, and highly practicable.

## Description

### TECHNICAL FIELD

The present disclosure relates to the technical fields of kitchen and household furniture machining, and in particular, relates to a locking false bottom multifunctional kitchen appliance.

### BACKGROUND

Filter sieves are tools that are commonly used in families to sieve powder. At present, the filter sieves in the related art are mostly integrally machined and inseparable. Now, families tend to use filter sieves having a large number of meshes, for example, 30 meshes for sieving corn powder, 30 to 40 meshes for sieving almond powder, 60 meshes for sieving Chinese traditional medicine powder, 80 to 100 meshes for sieving Sanchi powder, 100 to 120 meshes for sieving Chinese traditional medicine mask powder, and 120 to 150 meshes for sieving pearl powder. Since the conventional filter sieves are integrally manufactured and lack multi-functionality, filter sieves having a plurality of numbers of meshes need to be purchased for sieving these powders, which causes a waste of resources and space. Therefore, it is an inventive concept of the present disclosure to design a locking false bottom multifunctional kitchen appliance where sheets having any number of meshes may be replaced where necessary.

### SUMMARY

To overcome the defects in the related art, the present disclosure is intended to provide a locking false bottom multifunctional kitchen appliance which implements multiple functions, improves working efficiency, and saves a lot of space and resources.

The present disclosure is practiced using the following technical solutions:
According to a technical solution of the present disclosure, the present disclosure provides a locking false bottom multifunctional kitchen appliance, including: a main body that is machined into a sheet-like body from a silica gel material, two sides of a left side body and a right side body of the sheet-like body being docked to define a circular body, an upper flange and a lug protruding outwards from a top of the circular body, a support side being disposed at a bottom of the circular body, a groove being recessively disposed on the support side, a docking portion of the circular body being provided with a catch device, the catch device being capable of operating the left side body and the right side body of the circular body for combination or separation; and
a sheet that is in a flat circular shape and is formed of a bezel and a filter sieve, the bezel being defined to have a width of 1 mm to 2 cm and bandaged in a periphery of the filter sieve and received in the groove, the filter sieve having a number of meshes of 1 to 1000 and being disposed in a middle of the bezel, the bezel with the filter sieve being received in the groove and locking the sheet to the bottom of the circular body by the catch device.

Preferably, the catch device includes a channel, a flange, a buckle device, a locking groove, the channel being vertically disposed on the left side body, the flange being vertically disposed on the right side body, the channel mating with and being docked with the flange, the locking grooves being respectively vertically disposed on the left side body and the right side body, and the buckle device being provided with a clamping edge that is movably received in the locking groove.

As compared with the prior art, the present disclosure has the following advantages:
With the above structure according to the present disclosure, during use, any sheet having a desired number of meshes only needs to be mounted, such that the problem of single functionality of the filter sieve in the related art is addressed, and more space and resources are saved. In addition, since the sheets according to the present disclosure are diversified, during use, various desired tools or facilities may be formed by combination of the sheets. In this way, the sheet may be used for multi-functionality and achieve multiple effects, which is labor-saving and carefree, and improves economic benefits. The kitchen appliance according to the present disclosure features reasonable structure, convenient use, high practicability, and is well populated among consumers.

In addition to the above described objects, features, and advantages, the present disclosure still has other objects, features, and advantages. The present disclosure is further described hereinafter with reference to the accompanying drawings.

### BRIEF DESCRIPTION OF THE DRAWINGS

The accompanying drawings herein, which are incorporated herein and constitute a part of the specification, illustrate several exemplary embodiments of the present invention and together with the description, serve to illustrate the present disclosure, construing no limitation to the present disclosure. In the drawings:
FIG. 1 is a schematic structural view of a locking false bottom multifunctional kitchen appliance according to a preferred embodiment of the present disclosure;
FIG. 2 is a schematic exploded structural view of the locking false bottom multifunctional kitchen appliance according to a preferred embodiment of the present disclosure as shown in FIG. 1;
FIG 3 is a schematic structural view illustrating docking of a channel with a flange to fix a sheet into a groove in the locking false bottom multifunctional kitchen appliance according to a preferred embodiment of the present disclosure;
FIG. 4 is a schematic structural view illustrating docking of a channel with a flange to define a circular body in the locking false bottom multifunctional kitchen appliance according to a preferred embodiment of the present disclosure;
FIG 5 is a schematic structural view illustrating separation of a channel from a flange to define a sheet-like structure in the locking false bottom multifunctional kitchen appliance according to a preferred embodiment of the present disclosure;
FIG. 6 is a schematic structural view of a buckle device in the locking false bottom multifunctional kitchen appliance according to a preferred embodiment of the present disclosure;
FIG. 7 is a schematic structural view taken from another side of the buckle device in the locking false bottom multifunctional kitchen appliance according to a preferred embodiment of the present disclosure; and
FIG 8 is a schematic structural view of a sheet structure in the locking false multifunctional kitchen appliance according to a preferred embodiment of the present disclosure.

### DETAILED DESCRIPTION

It needs to be noted that in case of no conflict, the embodiments and features in the embodiments of the present disclosure may be combined together. The present disclosure is described hereinafter in detail with reference to the accompanying drawings and specific embodiments.

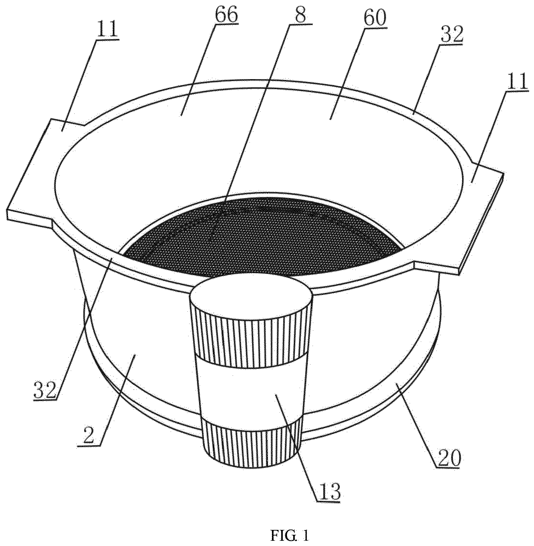

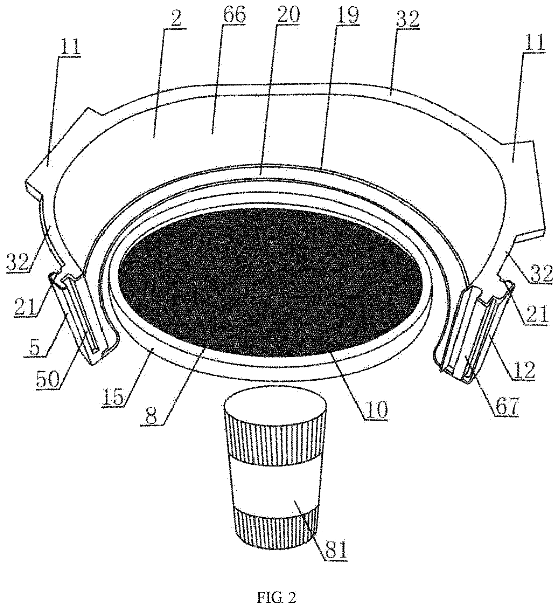

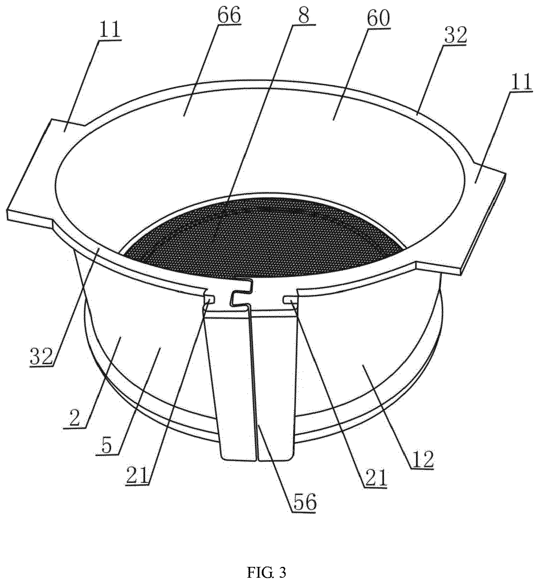

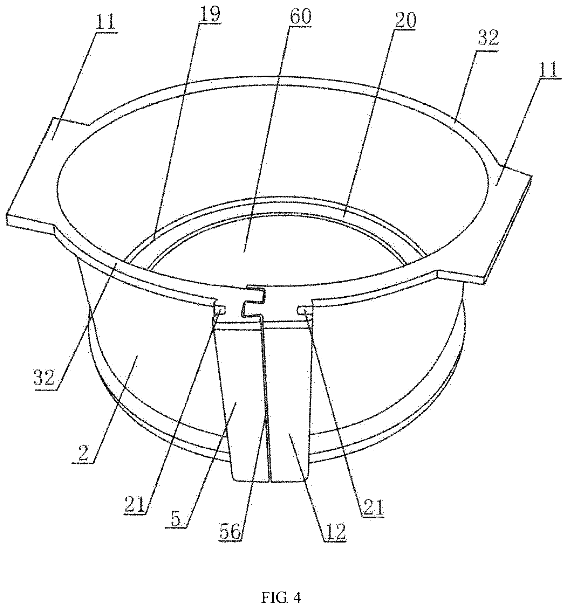

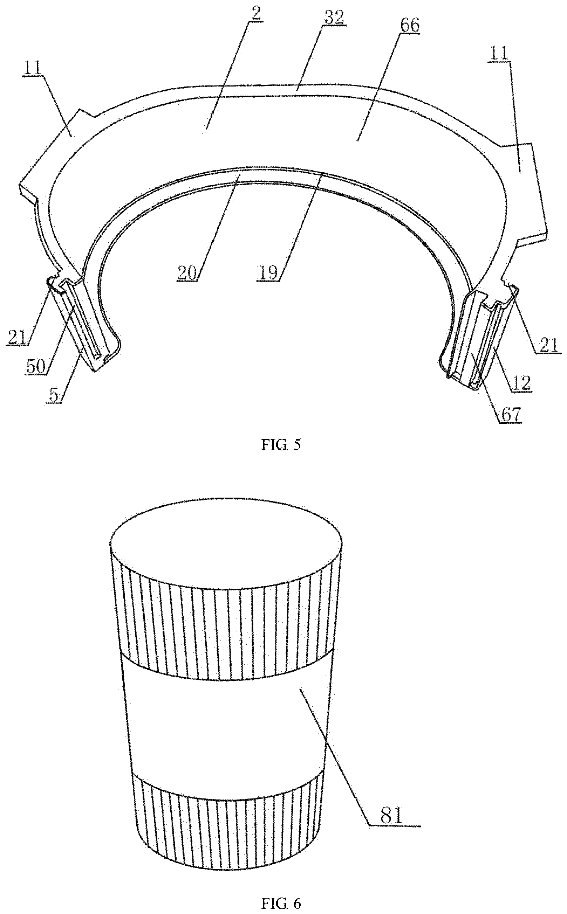

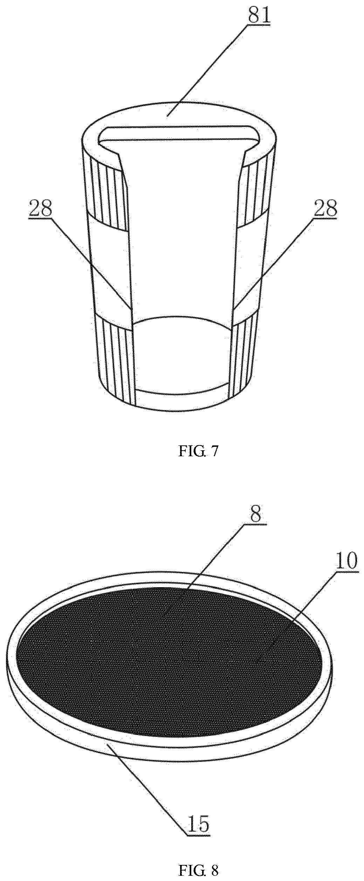

Referring to FIG 1, FIG. 2, FIG. 3, FIG. 4, FIG. 5, FIG. 6, FIG. 7, and FIG. 8, the present disclosure provides a locking false bottom multifunctional kitchen appliance. The kitchen appliance includes a main body 2 that is machined into a sheet-like body 66 from a silica gel material. Two sides of a left side body 5 and a right side body 60 of the sheet-like body are docked to define a circular body. An upper flange 32 and a lug 11 protrude outwards from a top of the circular body. The lugs 11 are respectively disposed on two opposing sides on the sides of the circular body as handles. A support side 20 is further disposed at a bottom of the circular body. A groove 19 is recessively disposed on the support side. A docking portion 56 of the circular body is provided with a catch device 13. The catch device 13 is capable of operating the left side body and the right side body of the circular body for combination or separation.

The kitchen appliance further includes a sheet 8. The sheet 8 may be designed to a circular sheet 8, a heart-shaped sheet 8, or an elliptical sheet 8. The sheet 8 configured to sieve powder is formed of a bezel 15 and a filter sieve 10. The bezel is defined to have a width of 1 mm to 2 cm and bandaged in a periphery of the filter sieve 10 and received in the groove. The filter sieve may have a number of meshes of 1 to 1000 and be disposed in a middle of the bezel. The bezel with the filter sieve being received in the groove and locking the sheet 8 to the bottom of the circular body 60 by the catch device 13. In practice, the sheet 8 may be in a plurality of types. The sheet 8 may be designed to a borderless tempered glass sealing sheet 8, a borderless stainless steel sealing sheet 8, a borderless stainless steel perforated sheet 8, and a bordered filter sieve sheet 8 having a plurality of different number of meshes. During use, a combination of the borderless tempered glass sealing sheet 8 with the main body 2 may function as a baking device, a combination of the borderless stainless steel sealing sheet 8 with the main body 2 may function as a water tub which may be conveniently used in the wild, a combination of the borderless stainless steel perforated sheet 8 with the main body may function as a vegetable basket for filtering water, and a combination of bordered filter sieve sheet 8 having a plurality of different number of meshes with the main body 2 may function to sieve Chinese traditional medicine powder, flour, bean powder, almond powder, corn powder, Chinese traditional medicine mask powder, pearl powder, Sanchi powder, or the like. In practical production, the sheets 8 may be fabricated by the manufacturers into different types desired by the purchasers. In the production, a plurality of types of sheets 8 may be fabricated and packaged together with the main body, such that multi-functionality is implemented. In this way, a product may achieve functions of many tools or facilities, which greatly saves space, and significantly lowers costs for the manufacturers.

The catch device includes a channel 50, a flange 67, a buckle device 81, a locking groove 21, wherein the channel is vertically disposed on the left side body, the flange is vertically disposed on the right side body, the channel mates with and is docked with the flange, the locking grooves are respectively vertically disposed on the left side body and the right side body, and the buckle device is movable and is provided with a clamping edge 28 that is movably received in the locking groove. During use, the buckle device is taken off, and a desired sheet 8 is mounted.

The above described embodiments are merely preferred embodiments of the present disclosure, but are not intended to limit the present disclosure. A person skilled in the art would derive various modifications and variations based on these embodiments. Any modification, equivalent replacement, and improvement made without departing from the spirit and principle of the present disclosure shall fall within the protection scope of the present disclosure.

## Claims

1. A locking false bottom multifunctional kitchen appliance, comprising:
a main body (2) that is machined into a sheet-like body (66) from a silica gel material, two sides of a left side body (5) and a right side body (12) of the sheet-like body being docked to define a circular body (60), an upper flange (32) and a lug (11) protruding outwards from a top of the circular body, a support side (20) being disposed at a bottom of the circular body, a groove (19) being recessively disposed on the support side, a docking portion (56) of the circular body being provided with a catch device (13), the catch device being capable of operating the left side body and the right side body of the circular body for combination or separation; and
a sheet (8) that is in a flat circular shape and is formed of a bezel (15) and a filter sieve (10), the bezel being defined to have a width of 1 mm to 2 cm and bandaged in a periphery of the filter sieve and received in the groove, the filter sieve having a number of meshes of 1 to 1000 and being disposed in a middle of the bezel, the bezel with the filter sieve being received in the groove and locking the sheet to the bottom of the circular body by the catch device.

2. The locking false bottom multifunctional kitchen appliance according to claim 1, wherein the catch device comprises a channel (50), a flange (67), a buckle device (81), a locking groove (21), the channel being vertically disposed on the left side body, the flange being vertically disposed on the right side body, the channel mating with and being docked with the flange, the locking grooves being respectively vertically disposed on the left side body and the right side body, and the buckle device being provided with a clamping edge (28) that is movably received in the locking groove.
